# EUROPEAN PATENT APPLICATION

(11) **EP 4 574 865 A1**
(43) Date of publication of application: **25.06.2025**
(21) Application number: 23218851.6
(22) Date of filing: 20.12.2023
(51) Int. Cl.: C08G 18/08, C08G 18/12, C08G 18/22, C08G 18/24, C08G 18/28, C08G 18/32, C08G 18/48, C08G 18/66, C08G 18/72, C08G 18/75, C08G 18/79, C09D 175/02, C09D 175/08

(54) **COATING PRIMER HAVING GOOD APPLICABILITY AT LOW TEMPERATURES**

(71) Applicant: Sika Technology AG, 6340 Baar (CH)
(72) Inventor: TURNER, Jeff, Maplewood, 07040 (US); HINZPETER, Claudia, Norwood, 07648 (US)
(74) Representative: Sika Patent Attorneys

(57) **Abstract**

Described is a polyurea composition comprising a first component A with at least one isocyanate-functional polyurethane polymer P1 and a second component B comprising a blocked amine BA and preferably a polyamine PA having a molecular weight in the range from 60 to 500 g/mol. The polyurea composition further comprises a silane S1 selected from the list consisting of isocyanatosilanes S1-1 and epoxy silanes S1-2 as well as an aminosilane S2.

The polyurea composition is notable for being suitable for providing a primer system for floor coating system which ensures sufficient adhesion to concrete, can cure at temperatures below 0 °C, preferably below -10 °C, without bubble formation and ensures sufficient applicability to be roller applied at temperatures below 0 °C.

## Description

### Technical field

The invention relates to floor coating primer systems featuring good applicability at low temperature, especially for producing industrial floors or carpark floors.

### Prior art

For floor covering systems, especially for trafficable floors such as industrial floors, bridges, and floors in carparks, there exists a sometimes diverse profile of requirements, especially in relation to flexibility in conjunction with high abrasion resistance and chemical resistance.

A primer layer is typically required to achieve adhesion to the substrate, which is usually concrete. A second layer typically encompassing the aggregates must have flexibility to provide crack bridging, which is necessary to achieve long term water proofing.

Current primers used for such applications are generally epoxy-based or urethane-based. Epoxy-based primers have limitations in flexibility that limit their capability to bridge cracks and provide waterproofing. Further, they generally do not cure well below 5 degrees Celsius. Urethane-based primers on the other hand have better curing performance at low temperatures but in general need a high NCO-content of provide good chemical adhesion to concrete. The drawback to said high NCO-content is that at cold temperature curing bubble formation occurs impairing adhesion and water proofing performance. Furthermore, said bubble formation will also impair the layers applied on top of the primer.

WO 2021228623 describes a polyurea composition that is notable for high surface roughness and for reliable and long-term bonding of the aggregates to the coating with no need for sealing. This polyurea composition has enough adhesion to the substrate that the application of a primer layer on the substrate prior to application is not necessary.

### Summary of the invention

The object of the invention, accordingly, was that of overcoming the above-discussed problems of the prior art, especially in order to provide a primer system for floor coating system which ensures sufficient adhesion to concrete, can cure at temperatures below 0 °C, preferably below -10 °C, without bubble formation and ensures sufficient applicability to be roller applied at temperatures below 0 °C.

Surprisingly it would be possible to achieve this object through the provision of a coating system as claimed in the first main claim.

Preferred embodiments of the composition are reproduced in the dependent claims. The invention is elucidated below comprehensively.

### A way of performing the invention

The invention relates to a polyurea composition comprising:
a first component **A** comprising;
   - at least one isocyanate-functional polyurethane polymer **P1**;
a second component **B** comprising;
   - at least one blocked amine **BA** which has a blocked, hydrolytically activatable amino group and either at least one further blocked, hydrolytically activatable amino group or at least one reactive group **R** which is selected from the group consisting of hydroxyl group, mercapto group and secondary amino group;
   - preferably at least one polyamine **PA** having a molecular weight in the range from 60 to 500 g/mol, especially 60 to 400 g/mol;
wherein the polyurea composition further comprises:
   - at least one silane **S1** selected from the list consisting of isocyanatosilanes **S1-1** and epoxy silanes **S1-2;**
   - at least one aminosilane **S2.**

The weight ratio between **S1/S2** is >2, preferably 2.05 - 4, and the total amount of the sum of (**S1+S2**) is 2 - 6 wt.-%, preferably 2.5 - 5 wt.-%, based on the total amount of the polyurea composition.

Further, the polyurea composition is free of aggregates **AG** of at 23°C solid thermosets.

A "primary hydroxyl group" refers to an OH group which is bonded to a carbon atom with two hydrogens.

A "primary amino group" refers to an NH₂ group which is bonded to an organic radical, and a "secondary amino group" refers to an NH group which is bonded to two organic radicals which may also together be part of a ring.

"Molecular weight" in the present document is understood as the molar mass (in grams per mole) of a molecule. "Average molecular weight" refers to the number average Mₙ of an oligomeric or polymeric mixture of molecules, which is typically determined using gel permeation chromatography (GPC) against polystyrene as standard.

"Storage-stable" or "storable" refers to a substance or a composition when it can be kept at room temperature in a suitable container for a prolonged time, customarily for at least 3 months up to 6 months or more, without any alteration in its application or service properties as a result of the storage to an extent relevant to its service.

"Room temperature" refers to a temperature of around 23°C.

A "diol chain extender" refers to an organic diol which is not a polymer.

The first component **A** comprises at least one isocyanate-functional polyurethane polymer **P1**.

The average molecular weight of polyurethane polymer **P1** is preferably in the range from 1000 to 20 000 g/mol, more preferably in the range from 2000 to 10000 g/mol.

The average NCO functionality of polyurethane polymer **P1** is preferably in the range from 1.7 to 3, especially from 1.8 to 2.5. The average NCO functionality of polyurethane polymer **P1** is more preferably in the range from 2.05 to 2.5.

The free isocyanate group content of polyurethane polymer **P1** is preferably in the range from 1 to 10 wt%, more preferably in the range from 1 to 5 wt%.

A suitable isocyanate-functional polyurethane polymer **P1** is obtainable from the reaction of at least one polyisocyanate with at least one polyol. This reaction may be effected by reacting the polyol and the polyisocyanate using customary processes, for example at temperatures of 50°C to 100°C with or without suitable catalysts, while the polyisocyanate has been dosed such that its isocyanate groups are present in a stoichiometric excess relative to the hydroxyl groups of the polyol. The polyisocyanate will advantageously have been dosed such that an NCO/OH ratio of 1.3 to 5, especially one of 1.5 to 3 is maintained. By "NCO/OH ratio" is meant the ratio of the number of isocyanate groups used to the number of hydroxyl groups used. After all the hydroxyl groups of the polyol have been converted, the polyurethane polymer **P1** is preferably left with a free isocyanate group content of 1 to 10 wt%, more preferably of 1 to 5 wt%.

The polyisocyanate used for preparing a polyurethane polymer **B3** is preferably an aliphatic polyisocyanate. Most preferably, the polyisocyanate used for the preparation of the polyurethane polymer **B3** is selected from the group of monomeric di- or triisocyanates and also oligomers, polymers, and derivatives of monomeric di- or triisocyanates of HDI, IPDI or H₁₂MDI, most preferred HDI or IPDI, especially IPDI.

The polyol used for preparing a polyurethane polymer **P1** is preferably selected from the list consisting of polyoxyalkylene polyol, polyester polyol, polycarbonate polyol, polyacrylate polyol and diol chain extender. Particular preference is given to polycarbonate polyols, polyoxyalkylene polyols, especially polyoxybutylene polyols, polyoxypropylene polyols and mixed polyoxyethylene-polyoxypropylene polyols and diol chain extender.

The diol chain extender is preferably an aliphatic or cycloaliphatic diol having a molecular weight in the range from 60 to 200 g/mol. Preferably the diol chain extender contains at least one primary hydroxyl group, more preferably two primary hydroxyl group. Most preferably the diol chain extender is 1,4 butanediol.

Most preferably, the polyols used for preparing the polyurethane polymer **P1** are a mixture of at least one diol chain extender, especially 1,4 butanediol, and polyoxyalkylene polyols.

It is especially preferred it more than 70 wt.-%, more than 80 wt.-%, more than 90 wt.-%, especially more than 95 wt.-% of the polyols used are selected from the list consisting of at least one diol chain extender and polyoxyalkylene polyols, especially a mixture thereof. Preferably the weight ratio between the polyoxyalkylene polyols and the at least one diol chain extender is from 40:1 to 80:1, preferably 50:1 to 70:1, more preferably 55:1 to 60:1.

The average molecular weight of the polyol for preparing a polyurethane polymer **P1**, not including the diol chain extender, is preferably 500-20 000 g/mol, especially in the range from 1000 to 8000 g/mol.

The polyol for preparing a polyurethane polymer **P1** is preferably a diol or a mixture between at least one diol and at least one triol, especially a mixture between at least one diol and at least one triol.

It may further be advantageous when the polyurethane polymer **P1** comprises more than 80 mol%, more than 90 mol%, more than 95 mol%, especially more than 98 mol%, more preferably more than 99 mol%, of all the isocyanate groups of the first component **A.**

The second component **B** comprises at least one blocked amine **BA** which has a blocked, hydrolytically activatable amino group and either at least one further blocked, hydrolytically activatable amino group or at least one reactive group R which is selected from the group consisting of hydroxyl group, mercapto group and secondary amino group.

The blocked, hydrolytically activatable amino group of the blocked amine **BA** is selected in particular from the group consisting of enamino groups, oxazolidino groups, ketimino groups and aldimino groups. Such blocked amines **BA** are substances known in polyurethane chemistry which are used as so-called latent hardeners in compositions containing isocyanate groups.

In the present document, "oxazolidino group" refers to both tetrahydrooxazole groups (5-ring) and tetrahydrooxazine groups (6-ring).

Preferably, the blocked, hydrolytically activatable amino group of the blocked amine BA is an aldimino group.

The blocked amine **BA** can be obtained in particular from the condensation reaction of a primary or secondary amine with a ketone or aldehyde. Particularly suitable as ketones are acetone, methyl ethyl ketone, methyl propyl ketone, methyl isopropyl ketone, methyl isobutyl ketone, methyl pentyl ketone, methyl isopentyl ketone, diethyl ketone, dipropyl ketone, diisopropyl ketone, dibutyl ketone, diisobutyl ketone, cyclopentanone, cyclohexanone and actetophen. Particularly suitable as aldehyde are formaldehyde, acetaldehyde, propanal, 2-methylpropanal, butanal, 2-methylbutanal, 2-ethylbutanal, pentanal, 2-methylpentanal, 3-methylpentanal, 4-methylpentanal, 2,3-dimethylpentanal, hexanal, 2-ethyl -hexanal, heptanal, octanal, nonanal, decanal, undecanal, 2-methyl-undecanal, dodecanal, methoxyacetaldehyde, cyclopropanecarboxaldehyde, cyclopentanecarboxaldehyde, cyclohexanecarboxaldehyde, diphenylacetaldehyde, benzaldehyde and substituted benzaldehydes.

A blocked amine **BA** having at least one oxazolidino group can be obtained in particular from the condensation reaction of at least one hydroxyamine in which the hydroxyl and primary amino groups are separated by an optionally substituted ethylene or trimethylene radical, with at least one ketone or aldehyde, in particular formaldehyde or one of the enolizable ketones or aldehydes mentioned; The aldehydes, in particular 2-methylpropanal, are particularly suitable. Particularly suitable as hydroxyamine are diethanolamine and diisopropanolamine, which lead to hydroxyoxazolidines from which polyoxazolidines can easily be prepared, for example by reaction with a polyisocyanate or a polyester.

A blocked amine BA having at least one ketimino or aldimino group can be obtained in particular from the condensation reaction of an amine having at least one primary amino group with at least one ketone or aldehyde, as mentioned above. If a ketone is used to block a primary amino group, a ketimino group is formed, while an aldimino group is formed when an aldehyde is used.

Suitable commercial ketimines or aldimines are, for example, Epikure^{®} Curing Agent 3502 (from Resolution Performance Products), Desmophen^{®} LS 2965A (from Bayer) and Vestamin^{®} A 139 (from Evonik Degussa).

The second component **B** preferably comprises at least one polyamine **PA** having a molecular weight in the range from 60 to 500 g/mol, especially 60 to 400 g/mol.

The polyamine **PA** is preferably an aromatic polyamine, especially an aromatic polyamine selected from the list consisting of m-phenylenediamine, p-phenylenediamine, 4,4'-, 2,4'- and/or 2,2'-diaminodiphenylmethane, 3,3'-dichloro-4,4'-diaminodiphenylmethane (MOCA), 2,4- and/or 2,6-tolylene-diamine, mixtures of 3,5-dimethylthio-2,4- and -2,6-tolylenediamine (available as Ethacure^{®} 300 from Albermarle), mixtures of 3,5-diethyl-2,4- and -2,6-tolylenediamine (DETDA), 3,3',5,5'-tetraethyl-4,4'-diaminodiphenylmethane (M-DEA), 3,3',5,5'-tetraethyl-2,2'-dichloro-4,4'-diaminodiphenylmethane (M-CDEA), 3,3'-diisopropyl-5,5'-dimethyl-4,4'-diaminodiphenylmethane (M-MIPA), 3,3',5,5'-tetraisopropyl-4,4'-diaminodiphenylmethane (M-DIPA), 4,4'-diaminodiphenyl sulfone (DDS), 4-amino-N-(4-aminophenyl)benzenesulfonamide, 5,5'-methylenedianthranilic acid, dimethyl (5,5'-methylene-dianthranilate), 1,3-propylene-bis(4-aminobenzoate), 1,4-butylene-bis(4-aminobenzoate), 1,2-bis(2-aminophenylthio)ethane, 2-methylpropyl 4-chloro-3,5-diaminobenzoate and tert-butyl 4-chloro-3,5-diaminobenzoate.

The polyamine **PA** is preferably an aromatic diamine, most preferably a mixture of 3,5-diethyl-2,4- and -2,6-tolylenediamine (DETDA).

The polyurea composition further comprises at least one silane **S1** selected from the list consisting of isocyanatosilanes **S1-1** and epoxy silanes **S1-2.** This at least one silane **S1** is preferably included in the first component **A.** Preferably, the polyurea composition comprises at least one isocyanatosilane **S1-1** and at least one epoxy silane **S1-2.**

The at least one epoxy silane **S1-2** is preferably of the formula (I) 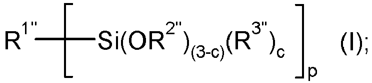 or they consist of at least one reaction product of this type.

R¹ here is an n-valent organic radical with at least one primary and/or secondary amino group. R^{1"} is a p-valent organic radical with at least one epoxy group. In addition, R² and R^{2"} are each independently an alkyl group having 1 to 4 carbon atoms, and R³ and R^{3"} are each independently H or an alkyl group having 1 to 10 carbon atoms. Finally, a and c are each independently 0, 1 or 2 and p can be 1, 2, 3 and 4.

The epoxy silane may thus have one or more silane groups.

In a preferred embodiment, a is 0 and R² is methyl or ethyl. Additionally, preferably, c is 0 and R^{2"} is methyl or ethyl.

More preferably, a and c are each 0, and R² and R^{2"} are each methyl or ethyl, especially methyl. The index p is preferably 1.

The epoxy silane of the formula (I) is preferably an epoxy silane of the formula (II) or (III): 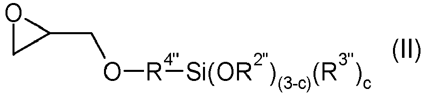 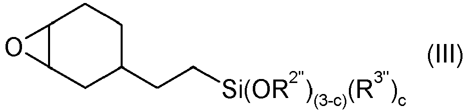 where R^{4"} is a linear or branched alkylene group having 1 to 6 carbon atoms, especially propylene.

Particularly suitable epoxy silanes have been found to be those of the formula (II) or (III) in which R^{4"} is propylene, c is 0 and R^{2"} is methyl or ethyl. The most preferred epoxy silanes are considered to be 2-(3,4-epoxycyclohexyl)ethyltrimethoxysilane, 2-(3,4-epoxycyclohexyl)ethyltriethoxysilane, 3-glycidyloxypropyltriethoxysilane and 3-glycidyloxypropyltrimethoxysilane.

The epoxy silane preferably bears a glycidyloxy group. Preferred epoxy silanes are considered to be 3-glycidyloxypropyltriethoxysilane and 3-glycidyloxypropyltrimethoxysilane. The most preferred epoxy silane is 3-glycidyloxypropyltrimethoxysilane.

Compounds of the formula (IV) are suitable as isocyanatosilanes **S1-1** 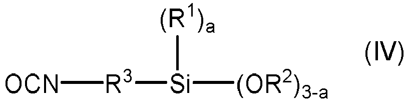 R¹, R², R³ and a have already been described above.

Examples of suitable isocyanatosilanes **S1-1** of the formula (IV) are isocyanatomethyltrimethoxysilane, isocyanatomethyldimethoxymethylsilane, 3-isocyanatopropyltrimethoxysilane, 3-Isocyanatopropyldimethoxymethylsilan, Isocyanatomethyltriethoxysilan, Isocyanatomethyldiethoxymethylsilan, 3-isocyanatopropyltriethoxysilane, 3-Isocyanatopropyldiethoxymethylsilan, and their analogues with isopropoxy groups instead of the methoxy or ethoxy groups on the silicon.

Preferably the isocyanatosilane **S1-1** is 3-isocyanatopropyltrimethoxysilane. For example, suitable isocyanatosilanes **S1-1** are commercially available under the trade names Silquest^{®} A-Link 35 from Momentive Performance Materials Inc., USA.

This at least one isocyanatosilanes **S1-1** is preferably included in the first component **A.**

If contained in the first component **A,** a part of the total amount of the isocyanatosilane **S1-1** can be chemically bound to the isocyanate-functional polyurethane polymer **P1**. In case a part of the total amount of the isocyanatosilane **S1-1** is chemically bound to the isocyanate-functional polyurethane polymer **P1**, the isocyanatosilane **S1-1** was preferably present during the preparation of the polyurethane polymer **P1** being part of the reaction mixture leading to the isocyanate-functional polyurethane polymer **P1**. The isocyanate group of the chemically bound isocyanatosilane **S1-1** is then changed into a urethane group.

The polyurea composition further comprises at least one aminosilane **S2.**

This at least one aminosilane S2 is preferably included in the second component **B.**

In the present document, the terms "silane" and "organosilane" identify compounds which firstly have at least one, customarily two or three, hydrolysable groups, preferably alkoxy groups or acyloxy groups bonded directly to the silicon atom, preferably via Si-O bonds, and secondly have at least one organic radical bonded directly to the silicon atom via an Si-C bond. Silanes of these kinds having alkoxy or acyloxy groups are also known by the person skilled in the art as organoalkoxysilanes and organoacyloxysilanes, respectively.

A property of such silanes is that of undergoing at least partial hydrolysis on contact with moisture. This hydrolysis produces organosilanols, these being organosilicon compounds containing one or more silanol groups (Si-OH groups), and subsequent condensation reactions produce organosiloxanes, these being organosilicon compounds containing one or more siloxane groups (Si-O-Si groups).

"Aminosilanes" is a term used for organosilanes whose organic radical has an amino group. "Primary aminosilanes" are aminosilanes which have a primary amino group, i.e., an NH₂ group bonded to an organic radical. "Secondary amino silanes" are aminosilanes which have a secondary amino group, i.e., an NH group bonded to two organic radicals.

The expression "independently of one another" here always means independently of one another in the same molecule if there are various possibilities.

Especially suitable aminosilanes **S2** are aminosilanes selected from the group consisting of 3-aminopropyltrimethoxysilane, 3-aminopropyldimethoxy-methylsilane, 3-amino-2-methylpropyltrimethoxysilane, 4-aminobutyltrimethoxy-silane, 4-aminobutyldimethoxymethylsilane, 4-amino-3-methylbutyltrimethoxy-silane, 4-amino-3,3-dimethylbutyltrimethoxysilane, 4-amino-3,3-dimethylbutyl-dimethoxymethylsilane, 2-aminoethyltrimethoxysilane, 2-aminoethyldimethoxy-methylsilane, aminomethyltrimethoxysilane, aminomethyldimethoxymethyl-silane, aminomethylmethoxydimethylsilane, N-methyl-3-aminopropyltrimethoxysilane, N-ethyl-3-aminopropyltrimethoxysilane, N-butyl-3-aminopropyltrimethoxysilane, N-cyclohexyl-3-aminopropyltrimethoxysilane, N-phenyl-3-aminopropyltrimethoxysilane, N-methyl-3-amino-2-methylpropyltrimethoxy-silane, N-ethyl-3-amino-2-methylpropyltrimethoxysilane, N-ethyl-3-aminopropyl-dimethoxymethylsilane, N-phenyl-4-aminobutyltrimethoxysilane, N-phenyl-aminomethyldimethoxymethylsilane, N-cyclohexylaminomethyldimethoxy-methylsilane, N-methylaminomethyldimethoxymethylsilane, N-ethylamino-methyldimethoxymethylsilane, N-propylaminomethyldimethoxymethylsilane, N-butylaminomethyldimethoxymethylsilane; N-(2-aminoethyl)-3-aminopropyltrimethoxysilane, 3-[2-(2-aminoethylamino)ethylamino]propyltrimethoxysilane, bis(trimethoxysilylpropyl)amine, and also analogs thereof having three ethoxy or three isopropoxy groups instead of the three methoxy groups on the silicon. It is possible to use mixtures of such aminosilanes as aminosilane **S2.** Preferably the aminosilane **S2** is 3-Aminopropyltrimethoxysilane.

The weight ratio between **S1/S2** is >2, preferably >2 - 4, 2.05 - 4, 2.05 - 3.5, 2.1 - 3.25, 2.15 - 3, 2.2 - 2.75, preferably 2.3 - 2.6. This has the advantage of a better adhesion of the cured polyurea composition on the substrate.

The total amount of the sum of (**S1+S2**) is 2 - 6 wt.-%, preferably 2.5 - 5 wt.-%, 2.75 - 4.5 wt.-%, more preferably 3-4 wt.-%, based on the total amount of the polyurea composition.

When calculating said weight ratio (**S1/S2**) or total amount (**S1+S2**), the total amount of isocyanatosilane **S1-1** is considered in the calculation, irrespective if a part of the total amount of isocyanatosilane **S1-1** is bound to the isocyanate-functional polyurethane polymer **P1** or not.

The polyurea composition is free of at least one aggregate **AG** of an at 23°C solid thermoset.

The at 23°C solid thermoset is preferably selected from the list consisting of polyallyl diglycol carbonate, styrene acrylonitrile, cross linked polyvinyl chloride, cross linked urea formaldehyde and nylon, preferably polyallyl diglycol carbonate.

Preferably the aggregate **AG** has a particle size of 500 - 5000 microns, more preferably 750 - 3500 microns, 850 - 3000 microns, most preferably 1000 - 2500 microns.

Preferably, the thermoset material of the aggregate **AG** contains reactive sites that react with polyamines, polyalcohols and polybasic acids.

Is it further preferred if the aggregate **AG** has a specific gravity (H₂O = 1) from 1.05 - 1.5, preferably 1.1 - 1.4, more preferably 1.2 - 1.3.

Is it also preferred if the aggregate **AG** has a hardness (Rockwell, M-scale) from M70 - M120, preferably M95 - M 110.

For example, suitable aggregate **AG** are commercially available under the trade name ResNSand from R.J. MARSHALL COMPANY (MI, USA).

In this document, the term "construction aggregate", or simply "aggregate", is preferably understood as coarse- to medium-grained particulate material used in construction.

In this document, the term "particle size" is preferably understood as the "mean particle size". The term "mean particle size" refers here preferably to the D50 value of the cumulative volume distribution curve, at which 50 vol% of the particles have a diameter which is smaller than the value. The mean particle size or the D50 value is determined preferably by laser diffractometry.

Preferably, the polyurea composition contains less than 5 wt.-%, less than 4 wt.-%, less than 2 wt.-%, less than 1 wt.-%, less than 0.5 wt.-%, more preferably less than 0.1 wt.-%, of at least one inorganic aggregate **AZ.** Most preferably, the polyurea composition is free of inorganic aggregate **AZ.**

Such inorganic aggregate **AZ** preferably have a particle size in the range from 0.2 to 3.0 mm. The inorganic aggregates preferably have an apparent density of > 2.0 kg/dm³.

The inorganic aggregates in question may come from natural deposits, examples being river gravel, moraine gravel, etc., which customarily have an apparent density of 2.2-3 kg/dm³. Also possible, however, are recycled granules from old crushed concrete, with an apparent density of around 2.4 kg/dm³.

Particularly preferred are inorganic aggregates comprising silica sand or corundum, especially comprising silica sand.

As and when required, the polyurea composition may comprise one or more additives. By adding additives to the polyurea composition it is possible to modify the properties of the coatings formed from it. Additives can be used, for example, to adjust the viscosity or the color of the polyurea composition.

Examples of possible additives are preferably selected from the list consisting of pigments, fillers, catalysts, emulsifiers, UV-absorbers and film-forming assistants.

The ratio of the groups reactive toward isocyanate groups, such as especially hydroxyl groups, primary and secondary amino groups, and aldimino groups, to the isocyanate groups in the polyurea composition is suitably in the range from 0.6 to 1.1, preferably in the range from 0.65 to 0.95, very preferably in the range from 0.7 to 0.85.

The curing reaction commences with the mixing of the first component **A** with the second component **B.** The reaction leads to an increase in viscosity and eventually to the curing of the polyurea composition, thereby ultimately curing the polyurea composition.

The present invention accordingly also describes a cured composition obtained from an aforementioned polyurea composition after the mixing of the first component **A** with the second component **B** and their curing.

In a further aspect, the invention also relates to the use of an above-described polyurea composition as a primer for a coating, preferably as a primer with a layer thickness from 0.05 to 0.9 mm, especially 0.15 to 0.8 mm, more preferably 0.25 to 0.6 mm.

Suitable substrates for the polyurea composition, especially the floor coating and preferably, in particular, industrial-floor, bridge, and parking-deck coating, are in principle all substrates which are present in edifices. Examples of suitable substrates are concrete, cement screed, magnesia screed, ceramic tiles, asphalt, and any existing synthetic resin coatings.

This use may preferably involve use in a floor coating system, preferably consisting of:
- at least one layer of the above-described polyurea composition;
- coating layer, preferably with a layer thickness in the range from 1.0 to 6 mm, 1.1 to 4 mm, especially 1.2 to 3 mm;
- optionally a top coat/sealing layer.

To produce the floor coating system of the invention, at least one layer of the above-described polyurea composition is applied to the substrate, optionally after customary substrate pretreatment, such as grinding, sandblasting, shot blasting or caustic treatment with solvents or acids, for example.

For application, the freshly mixed polyurea composition is preferably applied as a layer to a planar or slightly inclined substrate, typically by being poured onto the substrate and then spread flatly to the desired layer thickness, using a roller, a spreader, a notched trowel or a spatula, for example.

Application takes place preferably within the open time of the polyurea composition. The "open time" or else "pot life" here refers to the time elapsing between the mixing of the components **A** and **B** and the end of a state of the composition in which it is suitable for working.

After the coating system has been applied, it is worked on preferably with a roll, especially a structured roll. A structured roll of this kind preferably has a roll width of 10-80 cm, especially 15-40 mm, and a roll diameter of 4-20 mm, especially 6-10 mm.

This working, especially rolling, using a roll, especially a structured roll, is preferably accomplished within the open time of the coating system. The working preferably takes place immediately after application of the coating system, preferably 5-20 min after application of the coating system.

Preferably a layer thickness in the range from 0.05 to 0.9 mm, especially 0.15 to 0.8 mm, more preferably 0.25 to 0.6, is applied in one operation.

The coating system described is preferably applied as one layer.

Preferably, on top of the applied polyurea composition, a coating layer, preferably with a layer thickness in the range from 1.0 to 6 mm, 1.1 to 4 mm, especially 1.2 to 3 mm, is applied. The coating layer is preferably based on compositions selected from polyurethane compositions; polyurea composition, polyaspartic compositions, epoxy composition, preferably polyaspartic compositions. Preferably, said compositions have the following properties: **Tensile strength,** determined according to ASTM D412 by producing cured films (curing for 24 h at 23°C, followed by 24 h in an air circulation oven at 60°C) with dimensions of 25 mm × 100 mm × 0.2 mm and measurements conducted at 23°C and 50% relative air humidity: more than 1500 psi, preferably more than 1750 psi, more preferably more than 2000 psi; **Elongation at break,** determined according to ASTM D412 by producing cured films (curing for 14 days at 23°C) with dimensions of 25 mm × 100 mm × 0.2 mm and measurements conducted at 23°C and 50% relative air humidity: 150 - 600%, preferably 200 - 500%;
**Crack bridging,** passing the crack bridging test measured according to ASTM C1305 modified within ASTM C957.

Preferably, on top of said coating layer, a topcoat/sealing layer is applied. A "seal" in this context refers to a transparent or pigmented, high-grade coating which is applied as the uppermost, thin layer to a coating. It protects and enhances the surface of the coating. A typical layer thickness in this case, in the dry state, is in the range from 0.03 to 1 mm, especially 0.03 to 0.3 mm, more preferably 0.1 to 0.2 mm (around 150 g/m²).

Particular preference is given to use in a floor coating system selected from the group consisting of floor coating systems for balconies, patios, squares, industrial floors, bridges, and parking decks, especially industrial floors, bridges, and parking decks, very preferably parking decks.

In a further aspect the invention also relates to a method for producing a coating with an above-described polyurea composition, wherein the method comprises the following method steps:
a) mixing the first component **A** with the second component **B,**
b) applying the resulting mixed polyurea composition to a substrate,
c) preferably working the applied polyurea composition, and
d) curing the applied polyurea composition.

The substrates mentioned are preferably a substrate as described above.

Additionally, in this method, preference is given to the production of coating primers of the kind described above as preferred for floor coating primers.

The mixing of the first component **A** with the second component **B** takes place preferably:
- at temperatures in the range from -25 °C to 40°C, preferably -15 °C to 0°C.

The working and the curing of the applied polyurea composition takes place preferably:
- at temperatures in the range from -25 °C to 40°C, preferably -15 °C to 0°C.

The mixed polyurea composition obtained is applied preferably as described above for the use of a primer for coating system, the application of the polyurea composition, working on the applied polyurea composition using a roller, especially structured roller, and also layer thickness. The embodiments specified above in this context as being preferred are also preferred for the method.

The composition of the invention preferably has the following properties:
**Adhesion to concrete,** determined as described in the experimental section: more than 400 psi, preferably more than 500 psi, more preferably more than 550 psi;
**Aesthetic,** determined as described in the experimental section: No bubbles detectable by eye;
**Workability at -10 °C,** determined as described in the experimental section: To be easily roller applied;
**Curing at -10 °C,** determined as described in the experimental section: less than 10 hours, preferably less than 8 hours, more preferably less than 6 hours.

### Examples

Given below are working examples which are intended to further elucidate the invention described. Of course, the invention is not confined to these working examples described.

### Commercial substances used:

| Propylene carbonate | Propylene carbonate (solvent) |
|---|---|
| 1,4 butanediol | 1,4 butanediol |
| Polyether triol | Polypropylene oxide-based triol, Mw: 3'000 g/mol, |
| Polyether diol | Polypropylene oxide-based diol, Mw: 1'000 g/mol, |
| Catalyst 1 | Dibutyltin dilaurate (DBTL) |
| IPDI mono | IPDI Monomer, Mw: 222.3 g/mol |
| IPDI tri | IPDI Trimer, NCO content 11.9 ± 0.4 % |
| TiO₂ | Titanium dioxide, pigment |
| Catalyst 2 | Ethylacetoacetate titanate |
| Deformer | Defoaming agent |
| Solvent 1 | FlexaTrac^{™} DME-200, mixture of dimethyl glutarate (72 - 76 wt.-%), dimethyl adipate (23 - 27 wt.-%) and dimethyl succinate (<1 wt.-%), Ascend Performance Materials |
| Solvent 2 | Parachlorobenzotrifluoride, Oxsol 100, CAS: 98-56-6, Univar Solutions Inc. |
| A-1110 | 3-Aminopropyltrimethoxysilane, Mw: 221.4 g/mol, aminosilane, Silquest^{®} A-1110, Momentive Performance Materials, Germany |
| A-187 | 3-Glycidyloxypropyltrimethoxysilane, Mw: 236.1 g/mol, epoxy silane, Silquest^{®} A-187, Momentive Performance Materials, Germany |
| A-Link 35 | 3-Isocyanatopropyltrimethoxysilane, Mw: 205.28 g/mol, isocyanatosilane, Silquest A Link 35, Momentive Performance Materials, Germany |
| Polyamine **PA** | Mixture of 3,5-diethyl-2,4- and -2,6-tolylenediamine, Lonzacure DEDTA 80 |
| Blocked amine **BA** | Amine with blocked aldimino group, Vestamin A 139, Evonik |

Production and application of the mixed polyurea composition, and methods of testing:
To prepare the isocyanate-functional polyurethane polymer **P1** of the component A, the raw materials marked with an asterisk in table 1 were heated to 70°C and reacted for 2 hours.

The remaining additives for the component **A** shown in table 1 were added and mixed for 10 min using a cowles mixer. Immediately afterwards, the raw materials of the component B in table 1 were added and mixed for 1 minute before testing.

The **adhesion to concrete** was measured at 23°C by sandblasting a concrete surface. The mixed polyurea composition was applied with a thickness of 1.5 mm and a Flexitape (Sika^{®} Flexitape Heavy, Sika Corporation USA, Flexitape was cut into 2.5 cm wide strips by 15.25 cm long) was fully embedded into the uncured composition. After 1 week at 23°C the Flexitape was pulled by hand and the failure method was evaluated. If material was pulled/peeled off the substrate (adhesive failure) this was considered a "Failure". When the sample showed cohesive failure between the composition and the substrate the result was rated "Passing".

The **aesthetic** was determined after application of the mixed composition on a sandblasted concrete surface. The applied composition had a thickness of 1 - 1.5 mm and was cured for 6 hours at - 10 °C. Then the surface was inspected by eye for bubble formation. In addition, an additional layer of a polyaspartic composition with a thickness of 1.5 mm was applied to the cured composition and cured for 6 hours at - 10 °C. This additional layer was also checked for bubble formation. In neither case bubble formation was detected.

The **workability at -10 °C** was determined after application of the mixed composition on a sandblasted concrete surface. The applied composition was applied at -10 °C outdoor temperature and evenly distributed with a foam roller. The applicability/workability was judged by an experienced applicator and judged by the ease of application by foam roller.

The **curing at -10 °C** was determined by using a circular drying time recorder (Ultracycle Circular Drying Time Recorder from Gardco, USA) using a 10mm diameter Teflon ball stylus that is dragged through the applied coating and determining the drying time in accordance with ASTM D5895 at a temperature of -10 °C.

**Table 1, * used for the preparation of the isocyanate-functional polyurethane polymer P1**

| **Raw material** | **Wt.-%** |
|---|---|
| Component **A** | |
| Propylene carbonate* | 4.18 |
| 1,4 butanediol* | 1.31 |
| Polyether triol* | 33.86 |
| Polyether diol* | 10.45 |
| Catalyst 1 * | 0.04 |
| IPDI mono* | 18.89 |
| | |
| Silquest A-link 35 (**S1-1)** | 1.31 |
| Catalyst 2 | 0.41 |
| IPDI tri | 6.36 |
| Deformer | 0.45 |
| Silquest A-187 (**S1-2)** | 0.91 |
| Solvent 1 | 6.36 |
| Solvent 2 | 6.36 |

| Component **B** | |
|---|---|
| Polyamine **PA** | 5.45 |
| Blocked amine **BA** | 2.73 |
| Silquest A-1110 (**S2)** | 0.91 |
| **Total (weight-%)** | 100.00 |
| | |
| **Adhesion to concrete** | 600 psi |
| **Aesthetic** | No bubbling |
| **Workability at -10 °C** | Easily roller applied |
| **Curing at -10 °C** | <6 hours |

## Claims

1. A polyurea composition comprising:
a first component **A** comprising;
- at least one isocyanate-functional polyurethane polymer **P1;**
a second component **B** comprising;
- at least one blocked amine **BA** which has a blocked, hydrolytically activatable amino group and either at least one further blocked, hydrolytically activatable amino group or at least one reactive group **R** which is selected from the group consisting of hydroxyl group, mercapto group and secondary amino group;
- preferably at least one polyamine **PA** having a molecular weight in the range from 60 to 500 g/mol, especially 60 to 400 g/mol;
wherein the polyurea composition further comprises:
- at least one silane **S1** selected from the list consisting of isocyanatosilanes **S1-1** and epoxy silanes **S1-2;**
- at least one aminosilane **S2;**
wherein the weight ratio between **S1/S2** is >2, preferably 2.05 - 4, and
the total amount of the sum of **(S1+S2)** is 2 - 6 wt.-%, preferably 2.5 - 5 wt.-%, based on the total amount of the polyurea composition;
wherein the polyurea composition is free of aggregates **AG** of at 23°C solid thermosets.

2. The polyurea composition as claimed in claim 1, wherein the polyols used for preparing the polyurethane polymer **P1** are a mixture of at least one diol chain extender, preferably an aliphatic or cycloaliphatic diol having a molecular weight in the range from 60 to 200 g/mol, especially 1,4 butanediol, and polyoxyalkylene polyols.

3. The polyurea composition as claimed in claim 1 or claim 2, wherein the blocked, hydrolytically activatable amino group of the blocked amine **BA** is an aldimino group.

4. The polyurea composition as claimed in any of the proceeding claims, wherein the polyamine **PA** is preferably an aromatic diamine, most preferably a mixture of 3,5-diethyl-2,4- and -2,6-tolylenediamine (DETDA).

5. The polyurea composition as claimed in any of the proceeding claims, wherein the epoxy silane **S1-2** is 3-glycidyloxypropyltrimethoxysilane.

6. The polyurea composition as claimed in any of the proceeding claims, wherein the isocyanatosilane **S1-1** is 3-Isocyanatopropyltrimethoxysilane.

7. The polyurea composition as claimed in any of the proceeding claims, wherein the aminosilane **S2** is 3-Aminopropyltrimethoxysilane.

8. The polyurea composition as claimed in any of the proceeding claims, wherein the weight ratio between **S1/S2** is 2.05 - 3.5, 2.1 - 3.25, 2.15 - 3, 2.2 - 2.75, preferably 2.3 - 2.6.

9. The polyurea composition as claimed in any of the proceeding claims, wherein the total amount of the sum of (**S1+S2**) is 2.75 - 4.5 wt.-%, more preferably 3 - 4 wt.-%, based on the total amount of the polyurea composition.

10. The polyurea composition as claimed in any of the proceeding claims, wherein the polyurea composition contains 5 - 30 wt.-%, preferably 7.5 - 20 wt.-%, more preferably 10 - 15 wt.-%, based on the total amount of the polyurea composition, of at least one organic solvent, preferably selected from the list consisting of halogenated phenols and esters of dicarboxylic acids.

11. The polyurea composition as claimed in any of the proceeding claims, wherein the polyurea composition contains less than 5 wt.-%, less than 4 wt.-%, less than 2 wt.-%, less than 1 wt.-%, less than 0.5 wt.-%, more preferably less than 0.1 wt.-%, of fillers.

12. The use of a polyurea composition as claimed in any of claims 1 to 11 as a primer for a coating, preferably as a primer with a layer thickness from 0.05 to 0.9 mm, especially 0.15 to 0.8 mm, more preferably 0.25 to 0.6 mm.

13. The use as claimed in claim 12 in a floor coating system, consisting of
- at least one layer of the polyurea composition as claimed in any of claims 1 to 11;
- coating layer, preferably with a layer thickness in the range from 1.0 to 6 mm, 1.1 to 4 mm, especially 1.2 to 3 mm;
- optionally a top coat/sealing layer.

14. The use as claimed in claim 12 or 13 in industrial floors, bridges, and parking decks, more preferably parking decks.

15. A method for producing a coating with a polyurea composition as claimed in any of claims 1 to 11, the method comprising the following method steps:
a) mixing the first component **A** with the second component **B,**
b) applying the resulting mixed polyurea composition to a substrate,
c) preferably working the applied polyurea composition, and
d) curing the applied polyurea composition.
